# EUROPÄISCHE PATENTSCHRIFT

(11) **EP 3 011 324 B1**
(45) Veröffentlichungstag und Bekanntmachung des Hinweises auf die Patenterteilung: **03.03.2021**
(21) Anmeldenummer: 14710860.9
(22) Anmeldetag: 13.03.2014
(51) Int. Cl.: G01N 27/406, G01N 27/407

(54) **SENSORELEMENT MIT KONTAKTFLÄCHE**
SENSOR ELEMENT HAVING A CONTACT SURFACE
ÉLÉMENT CAPTEUR AVEC SURFACE DE CONTACT

(30) Priorität: 21.06.2013 DE 102013211791
(43) Veröffentlichungstag der Anmeldung: 27.04.2016
(73) Patentinhaber: Robert Bosch GmbH, 70442 Stuttgart (DE)
(72) Erfinder: JUESTEL, Thomas, 96114 Hirschaid-Juliushof (DE); SCHNEIDER, Jens, 71229 Leonberg (DE); GALLINGER, Carsten, 71229 Leonberg (DE); ROTTMANN, Andreas, 96188 Stettfeld (DE); BUSE, Frank, 70437 Stuttgart (DE); LUX, Markus, 71364 Winnenden (DE); ROSENLAND, Marc, 74343 Hohenhaslach (DE)
(86) Internationale Anmeldenummer: PCT/EP2014/055004
(87) Internationale Veröffentlichungsnummer: WO 2014/202244

(56) Entgegenhaltungen:
- EP-A2- 2 141 492
- DE-A1- 10 208 533
- DE-A1-102004 050 226
- DE-A1-102006 055 797
- US-A1- 2013 048 627
- US-B1- 6 572 747

## Beschreibung

### Stand der Technik

Die Erfindung geht aus von bekannten Sensorelementen, welche beispielsweise als Abgassensoren eingesetzt werden, insbesondere als Lambdasonden, die in Kraftfahrzeugen eine sehr große Verbreitung gefunden haben. Auch auf andere Arten von Sensorelementen, ist die Erfindung jedoch anwendbar, zum Beispiel auf Sensoren zum Nachweis anderer gasförmiger Bestandteile von Abgasen und auf Partikelsensoren oder dergleichen.

Die Erfindung betrifft insbesondere ein gesintertes oder sinterbares keramisches Sensorelement das beispielsweise durch Zusammenbringen, insbesondere Aufeinanderstapeln, einzelner, gegebenenfalls bedruckter, keramischer Grünfolien hergestellt ist.

Das Sensorelement umfasst insbesondere mindestens ein elektrisches, elektrochemisches und/oder elektronisches Funktionselement in einem ersten, in der Regel dem Abgas zugewandten Endbereich des Sensorelements. Eine elektrische Versorgbarkeit des Sensorelements ist vorliegend durch eine Kontaktfläche auf der Außenfläche des Sensorelements in einem zweiten, in der Regel dem Abgas abgewandten, Bereich vorgesehen.

Neben der elektrischen Leitfähigkeit ist von der Kontaktfläche im Betrieb und bei der Herstellung des Sensorelements eine hohe Temperaturbeständigkeit und chemische Beständigkeit zu fordern. Verbreitet kommen daher Edelmetalle, wie beispielsweise Platin oder dergleichen zum Einsatz. Da solche Edelmetalle vergleichsweise teuer sind, besteht allgemein das Bestreben, die Kontaktfläche nach Möglichkeit zu verkleinern.

Andererseits ist eine Verkleinerung der Kontaktfläche als kritisch anzusehen, wenn aufgrund von Fertigungstoleranzen des Sensorelements oder aufgrund von Fertigungstoleranzen von mit dem Sensorelement in einem Sensor zusammenwirkenden Kontaktelementen, wie metallischen Drähten, Stiften, Federn oder dergleichen, eine Kontaktierung nicht mehr unter allen Umständen sicher gewährleistet ist.

Aus der DE 102 08 533 A1, der DE 10 2004 047 783 A1 und der DE 10 2009 055 416 A1 sind bereits Sensorelemente mit Kontaktflächen bekannt. Diese Kontaktflächen sind in ihren von den Funktionselementen abgewandten Endbereichen rechteckig ausgeführt.

Weitere Sensoren sind gezeigt in DE 10 2006 055 797 A1 und in EP 2 141 492 A2.

### Vorteile der Erfindung

Erfindungsgemäße Sensorelemente mit den Merkmalen des Anspruchs 1 haben den Vorteil, dass sie bzw. ihre Kontaktflächen mit vermindertem Materialeinsatz und somit kostengünstig hergestellt werden können, ohne dass es im Zusammenhang mit der elektrischen Kontaktierung zu vermehrten Montagefehlern kommen würde.

Hierfür ist erfindungsgemäß vorgesehen, dass die Kontaktfläche auf seiner vom ersten Endbereich abgewandten Seite eine Abrundung aufweist.

Untersuchungen der Anmelderin zu den Fertigungsschwankungen der relativen Lage von Kontaktfläche und zugehörigem Kontaktelement nach insbesondere schnell getakteter automatisierter Montage haben ergeben, dass relative Lageschwankungen sowohl in Längsrichtung als auch in Querrichtung auftreten, sodass sich eine Verminderung der Länge und der Breite der Kontaktflächen unter die entsprechenden Streubreiten zu Montagefehlern führen würde.

Die gleichen Untersuchungen haben auch ergeben, dass die Schwankungen der relativen Lage von Kontaktfläche und zugehörigem Kontaktelement nach insbesondere automatisierter Montage in Längsrichtung mit den Schwankungen in Querrichtung nicht bzw. nur vernachlässigbar schwach korreliert sind.

Im Ergebnis werden daher zu Testzwecken verwendete gerade noch ausreichend groß dimensionierte rechteckige Kontaktflächen sowohl in ihren Randbereichen in Längs- als auch in ihren Randbreichen in Querrichtung mit einer gewissen Häufigkeit von dem Kontaktelement getroffen. Mit einer praktisch verschwindend kleinen Häufigkeit werden diese rechteckigen Kontaktflächen jedoch von den Kontaktelementen in den dem Abgas abgewandten Eckbereichen getroffen. Es wird vor diesem Hintergrund klar, warum die Abrundung der Kontaktflächen in diesen Bereichen die Häufigkeit von Montagefehlern nicht erhöht.

Die erfindungsgemäß vorgesehene Abrundung ermöglicht insofern insbesondere auch eine Verkleinerung der Kontaktfläche, insbesondere auch bei Sensorelementen, die selbst nicht oder nur bis zu einem gewissen Grad miniaturisiert sind und bei denen insofern erhöhte Montageanforderungen gestellt sind. Im Ergebnis kann der Flächeninhalt einer Kontaktfläche, mehrerer Kontaktflächen oder aller Kontaktflächen des Sensorelements (in Aufsicht auf das Sensorelement bzw. in Aufsicht auf die größte Fläche des Sensorelements) jeweils auf 2% oder weniger des Flächeninhalt der größten Fläche des Sensorelements reduziert sein, insbesondere sogar auf jeweils 1,5% oder weniger des Flächeninhalt der größten Fläche des Sensorelements reduziert sein.

Zusätzlich oder alternativ kann die Länge einer Kontaktfläche, mehrerer Kontaktflächen oder aller Kontaktflächen des Sensorelements auf 9% oder weniger der Länge des Sensorelements reduziert sein, insbesondere sogar auf 8% oder weniger der Länge des Sensorelements reduziert sein. Zusätzlich oder alternativ kann auch die Breite einer Kontaktfläche, mehrerer Kontaktflächen oder aller Kontaktflächen des Sensorelements auf 35% oder weniger der Breite des Sensorelements reduziert sein, insbesondere sogar auf 31,5% oder weniger der Länge des Sensorelements reduziert sein.

Die Erfindung kann insbesondere auch Sensorelemente vorteilhaft betreffen, deren Höhe (gesintert) nicht kleiner als 1,2mm ist und/oder deren Länge (gesintert) nicht kleiner als 50mm ist und/oder deren Breite (gesintert) nicht kleiner als 4,5mm ist, und bei denen insofern erhöhte Montageanforderungen gestellt sind. Die Maße für ungesinterte Sensorelemente liegen um 25% höher.

Die Begriffe "Längsrichtung", "Querrichtung" und "Hochrichtung" werden im Rahmen dieser Anmeldung grundsätzlich lediglich im Sinne eines rechtwinkligen Bezugssystems verwendet. Insbesondere kann es sich jedoch überdies um Richtungen handeln, die durch das Sensorelement ausgezeichnet sind, beispielsweise kann bei einem insbesondere quaderförmigen Sensorelement die Längsrichtung die Richtung sein, in die die längsten Seitenkanten des Sensorelements weisen, die Hochrichtung die Richtung sein, in die die kürzesten Seitenkanten des Sensorelements weisen und/oder die Querrichtung die Richtung sein, in die die Seitenkanten des Sensorelements weisen, die eine mittlere Länge aufweisen. Beispielsweise kann bei einem stäbchenförmigen Sensorelement die Längsrichtung in Richtung einer Achse weisen, um die das stäbchenförmige Sensorelement rotationssymmetrisch bzw. im Wesentlichen rotationssymmetrisch ist.

Wo auf eine Richtung nur im Wesentlichen Bezug genommen wird, kommen neben der Richtung im engen Sinn auch Richtungen in Betracht, die von dieser Richtung geringfügig abweichen, zum Beispiel um nicht mehr als 15° und/oder Richtungen, die zu dieser Richtung zumindest nicht orthogonal sind. Eine Richtung ist durch eine Struktur zusätzlich auch dann im Wesentlichen realisiert, wenn die betreffende Struktur nur in einem kleinen Teilbereich, der zum Beispiel nicht mehr als 10% der Struktur umfasst, abgeweicht.

Unter "Länge des Sensorelements" wird die Erstreckung des Sensorelements in Längsrichtung, unter "Breite des Sensorelements" wird die Erstreckung des Sensorelements in Querrichtung und unter "Höhe des Sensorelements" wird die Erstreckung des Sensorelements in Hochrichtung im Rahmen dieser Anmeldung verstanden. Diese Richtung ist auch für die Aufsicht auf das Sensorelement maßgeblich.

Unter dem Begriff "Endbereich des Sensorelements" wird mit Bezug auf eine Längsrichtung im Rahmen dieser Anmeldung grundsätzlich lediglich ein zusammenhängender Teilbereich des Sensorelements verstanden, der das betreffende Ende des Sensors umfasst und nicht mehr als 50% der Länge des Sensorelements ausmacht. Insofern überschneiden sich ein Endbereich und ein gegenüberliegender Endbereich beispielsweise lediglich in einer Fläche. Etwas eingeschränkter kann ein Endbereich des Sensorelements insbesondere auch als ein zusammenhängender Teilbereich des Sensorelements verstanden werden, der das betreffende Ende des Sensors umfasst und nicht mehr als ein Drittel oder sogar nicht mehr als ein Viertel der Länge des Sensorelements ausmacht.

Der Begriff "Funktionselement" ist vorliegend grundsätzlich nicht eng auszulegen. Beispielsweise kann es sich um eine mit dem Außenraum des Sensorelements kommunizierende Edelmetallelektrode oder Cermetelektrode handeln und/oder um einen elektrischen Widerstandheizer, der insbesondere einen elektrischen Widerstand von maximal 30 Ohm bei 20°C aufweist, und/oder um dergleichen.

Unter dem Begriff "auf einer Seite abgerundete Kontaktfläche" wird im Rahmen dieser Anmeldung grundsätzlich lediglich verstanden, dass die Kontaktfläche aus einer rechteckigen Kontaktfläche gleicher Länge und gleicher Breite hervorgegangen gedacht werden kann, von der auf der betreffenden Seite an zumindest einem Eckbereich Material weggenommen wurde.

Wenngleich die sich dabei ergebende Kontur, insbesondere im engen mathematischen Sinn, ganz oder abschnittsweise kreisbogenförmig sein kann und insbesondere einen Bogen von 90° oder 180° umspannen kann, ist grundsätzlich lediglich auf die Entfernung von Material aus den Eckbereichen abzustellen. Auch eine Abschrägung oder Anfasung ist in diesem Sinne von dem Begriff "Abrundung" umfasst.

Während sich im ersten Fall der Begriff "Krümmungsradius" auf natürliche Art und Weise ergibt, ist er bei nicht im engen mathematischen Sinn kreisbogenförmigen Abrundungen durch den Krümmungsradius der kreisbogenförmigen Abrundung gegeben, der von der tatsächlichen Kontur im Mittel am wenigsten abweicht. Dies wird unten noch anhand von Beispielen erläutert.

Vorteilhafte Ausprägungen der Erfindung sehen vor, dass der Krümmungsradius eine gewisse Mindestgröße beträgt oder überschreitet. Die vorteilhaften Wirkungen der Erfindung sind dann besonders ausgeprägt. Neben metrischen Mindestgrößen, zum Beispiel 0,3mm; 0,4mm; 0,5mm oder 0,6mm bei gesinterten Sensorelementen, kommen alternativ oder zusätzlich Mindestgrößen in Betracht, die sich anteilig an der Breite des Sensorelements bemessen, zum Beispiel 6%; 8%; 10% oder 12%, und/oder anteilig an der Breite der Kontaktfläche bemessen, zum Beispiel 15%; 23%; 30% oder 45%.

Im vorteilhaften Extremfall ist die Abrundung maximal, das heißt der Endabschnitt der Kontaktfläche ist halbkreisförmig oder halbkreisähnlich. Der Krümmungsradius ist dann durch die halbe Breite der Kontaktfläche gegeben.

Spezielle Ausführungen der Erfindung betreffen Sensorelemente, bei denen in dem dem Funktionselement gegenüberliegenden Endbereich zusätzlich zu der Kontaktfläche eine weitere Kontaktfläche angeordnet ist, zum Beispiel nebeneinander.

Die weitere Kontaktfläche kann entweder das gleiche Funktionselement, zum Beispiel einen elektrischen Heizer, kontaktieren wie die Kontaktfläche oder ein anderes Funktionselement kontaktieren als die Kontaktfläche, zum Beispiel eine weitere Elektrode.

Grundsätzlich kann die weitere Kontaktfläche ebenfalls gemäß eines im Rahmen dieser Anmeldung für die Kontaktfläche angegebenen Merkmals oder einer im Rahmen dieser Anmeldung für die Kontaktfläche angegebenen Merkmalskombination ausgestaltet sein. Insbesondere können die Kontaktfläche und die weitere Kontaktfläche spiegelsymmetrisch oder im Wesentlichen spiegelsymmetrisch zu einer Achse sein, die in Längsrichtung des Sensorelements, insbesondere mittig in Querrichtung zu dem Sensorelement verläuft.

Im Fall von zwei Kontaktflächen ist zwischen den Kontaktflächen ein Abstand ausgebildet, der in der Regel so ausreichend groß bemessen ist, dass ein Nebenschluss zwischen den Kontaktflächen auch im Rahmen von Fertigungsschwankungen und -imperfektionen ("Verschmieren") sicher ausgeschlossen ist. Typischerweise wird ein Isolationswiderstand zwischen den Kontaktflächen in der Größenordnung von Megaohm bei Zimmertemperatur, 20°C, und in der Größenordnung von hunderttausend Ohm bei maximaler Betriebstemperatur, zum Beispiel 400°C, gefordert.

Untersuchungen der Anmelderin haben ergeben, dass sich die Nebenschlussfestigkeit zwischen den Kontaktflächen weiter erhöht durch die Abrundung einer oder sogar beider Kontaktflächen in der erfindungsgemäße Art und Weise, insbesondere einander zugewandten Eckbereiche der Kontaktflächen. Dies ist sogar der Fall, wenn der Abstand zwischen den Kontaktflächen (kürzeste Verbindung) sich durch den gedachten Vorgang der Abrundung nicht vermindert. Vermutlich ist dieser Effekt auf im Bereich von scharfen Ecken auftretende Potentialspitzen bzw. Feldstärkemaxima etc. zurückzuführen.

In diesem Zusammenhang ist es wiederum bevorzugt, dass der Krümmungsradius eine gewisse Mindestgröße beträgt oder überschreitet. Die vorteilhaften Wirkungen der Erfindung sind dann besonders ausgeprägt. Bevorzugt beträgt der Krümmungsradius mehr als der Abstands zwischen den auf dem Sensorelement ausgebildeten Kontaktflächen oder mehr als ein Anteil des Abstands der zwischen den auf dem Sensorelement ausgebildeten Kontaktflächen, zum Beispiel 10%; 30% oder 50%.

Spezielle Ausführungen der Erfindung betreffen Sensorelemente mit mindestens einer Kontaktfläche, die mit einem im Inneren des Sensorelements angeordneten Funktionselement und/oder mit einer im Inneren des Sensorelements angeordneten Leiterbahn zusammenwirkt. Die elektrische Verbindung der Kontaktfläche zu im Inneren des Sensorelements liegenden Bereichen erfolgt über eine Durchführung, die ausgehend von der Kontaktfläche, beispielsweise senkrecht zu der Kontaktfläche, in das Innere des Sensorelements führt und die aus dem Stand der Technik, zum Beispiel der DE102009028194 A1, an sich bekannt ist.

Bedeutsam ist, dass die Durchführung einen fertigungstechnisch mechanisch und elektrisch sensiblen Bereich der elektrischen Verbindung zwischen Kontaktfläche und Funktionselement darstellt. Aus diesem Grund ist es erwünscht, dass der Bereich, in dem die Durchführung auf die Kontaktfläche trifft, nicht mechanisch mit einem Kontaktelement wechselwirkt, das das Sensorelement an der Kontaktfläche, zum Beispiel kraftschlüssig, von außerhalb des Sensorelements elektrisch kontaktiert.

Erfindungsgemäß ist daher vorgesehen, dass die Kontaktfläche einen ersten Bereich (nachfolgend Rumpfbereich) umfasst, der für die mechanische Wechselwirkung mit einem Kontaktelement vorgesehen ist, und einen zweiten Bereich (nachfolgend Kopfbereich) umfasst, der nicht für die mechanischen Wechselwirkung mit einem Kontaktelement vorgesehen ist, sondern die Verbindung zu der Durchführung darstellt.

Erfindungsgemäß ist der Rumpfbereich oval mit geraden Seitenkanten ausgebildet. Der Kopfbereich ist insbesondere kreisförmig oder kreisringförmig ausgebildet. Zwischen Rumpfbereich und Kopfbereich ist ein dritter Bereich (nachfolgend Halsbereich) ausgebildet, dessen Funktion es ist, Rumpfbereich und Kopfbereich bei minimiertem Materialbedarf elektrisch verbunden zu beabstanden. Zur Minimierung des Materialbedarfs bei Sicherstellung der Kontaktierbarkeit und der elektrischen Verbindung zwischen Kontaktfläche und Funktionselement ist vorgesehen, dass dem die Breite der Kontaktfläche geringer ist als im Rumpfbereich und im Kopfbereich und zwar bezogen auf den Kopfbereich vorzugsweise um mindestens 5% oder sogar 25% und/oder bezogen auf den Rumpfbereich vorzugsweise um jeweils mindestens 15% oder sogar 50%.

Um die Durchführungen nicht übermäßig weit in Richtung auf das Funktionselement zu verschieben, wo in der Regel erhöhte Temperaturen und damit reduzierte Isolationsfestigkeiten vorliegen, ist es vorteilhaft die Längserstreckung des Halsbereichs zu beschränken, beispielsweise auf eine Länge, die geringer ist als die Längserstreckung des Rumpfbereiches und/oder des Kopfbereiches.

Ferner hat es sich als vorteilhaft herausgestellt, die Durchführungen ausgehend von in Querrichtung der Sensorelemente außermittig angeordneten Kontaktflächen, hin zur Sensormitte in Querrichtung zu orientieren. Entsprechend sind auch die Kopfbereiche der Kontaktflächen zur Sensormitte in Querrichtung hin zu orientieren.

Bei einer besonderen Weiterbildung der Erfindung ist das dadurch realisiert, dass zusätzlich der Rumpfbereich der Kontaktfläche eine erste Symmetrieachse aufweist, die insbesondere in Längsrichtung des Sensorelements verläuft, und der Kopfbereich und der Halsbereich der Kontaktfläche eine gemeinsame zweite Symmetrieachse aufweisen und erste Symmetrieachse und zweite Symmetrieachse einen Winkel, insbesondere von 5° bis 25°, einschließen.

Im Zusammenhang mit der vorliegenden Erfindung kann eine spezifische Materialwahl für Leiterbahnen, Zuleitungen, Durchführungen und Kontaktflächen weiterhin zielführend sein. Grundsätzlich sind hierbei Materialien mit einem Edelmetallanteil von 83 Gew.-% oder mehr bevorzugt, sodass vorgegebene ohmsche Widerstände mit minimiertem Edelmetalleinsatz erreicht werden können. Für zumindest eine Zuleitung zu der Heizvorrichtung sind sogar Edelmetallanteile von 95 Gew.-% oder mehr, zum Beispiel 98 Gew.-% bevorzugt. Ein Anteil von mindestens 1 Gew.-% Al203, besser sogar mindestens 1,5 Gew% Al203, bevorzugt maximal 2,5 Gew% Al203, hat sich zur präzisen Einstellbarkeit des elektrischen Widerstands dieser Strukturen als günstig herausgestellt. Zumindest eine Zuleitung zu der Heizvorrichtung kann mit der Heizvorrichtung einstückig und aus dem gleichen Material ausgestaltet sein.

Zusätzlich oder alternativ ist für die Zuleitung zu der Cermetelektrode und/oder für zumindest eine Kontaktfläche ein geringerer Edelmetallanteil als für die zumindest eine Zuleitung zu der Heizvorrichtung vorgesehen, bevorzugt zum Beispiel 83 Gew.-% bis 87 Gew.-%, wobei insbesondere in der Zuleitung zu der Cermetelektrode ein Anteil an ZrO2 und Y2O3 von zusammen 12 Gew.-% bis 16 Gew.-% vorgesehen ist. Vorteil ist, dass die Zuleitung zu der Cermetelektrode zusammen mit der Cermetelektrode in einem Prozessschritt und aus dem gleichen Material hergestellt werden kann. Auch für die Zuleitung zu der Cermetelektrode bzw. für die Cermetelektrode ist ein Al2O3-Anteil, bevorzugt 0,2 Gew.-% bis 1 Gew.-% vorteilhaft.

Zusätzlich oder alternativ ist für zumindest eine Durchführung ein geringerer Edelmetallanteil als für die zumindest eine Zuleitung zu der Heizvorrichtung vorgesehen, bevorzugt zum Beispiel 83 Gew.-% bis 87 Gew.-%, wobei in der Durchführung ein Anteil an ZrO2 und Y2O3 von zusammen 3 Gew.-% bis 8 Gew.-% und zusätzlich ein Anteil von Nb2O5 von 6 Gew.-% bis 12 Gew.-% vorgesehen ist. Vorteil ist, dass die Durchführungen im Fertigungsprozess besser handhabbar sind. Insbesondere weisen entsprechende Pasten bessere rheologische Eigenschaften auf und ermöglichen eine bessere keramische Anbindung der Durchführungen innerhalb der Sensorelemente. Im Zusammenhang mit Sensorelementen, die überwiegend aus YSZ bestehen, bildet sich so überdies in den Randbereichen der Durchführungen eine verminderte Sauerstoffionenleitfähigkeit aus, was die Funktionalität der Sensorelemente verbessert.

Die oben genannten Edelmetallanteile können insbesondere aus Platin bestehen. Alternativ, insbesondere in Bezug auf zumindest eine Durchführung, können zur Stabilisierung der Metallphase Anteile, bevorzugt 0,2 Gew.-% bis 0,8 Gew.-% bezogen auf die Gesamtzusammensetzung der Materialien, aus Rhodium bestehen und/oder Anteile, bevorzugt 0,2 Gew.-% bis 1 Gew.-% bezogen auf die Gesamtzusammensetzung der Materialien, aus Palladium bestehen.

Weitere Edelmetallanteile können stets vorgesehen sein.

### Zeichnung

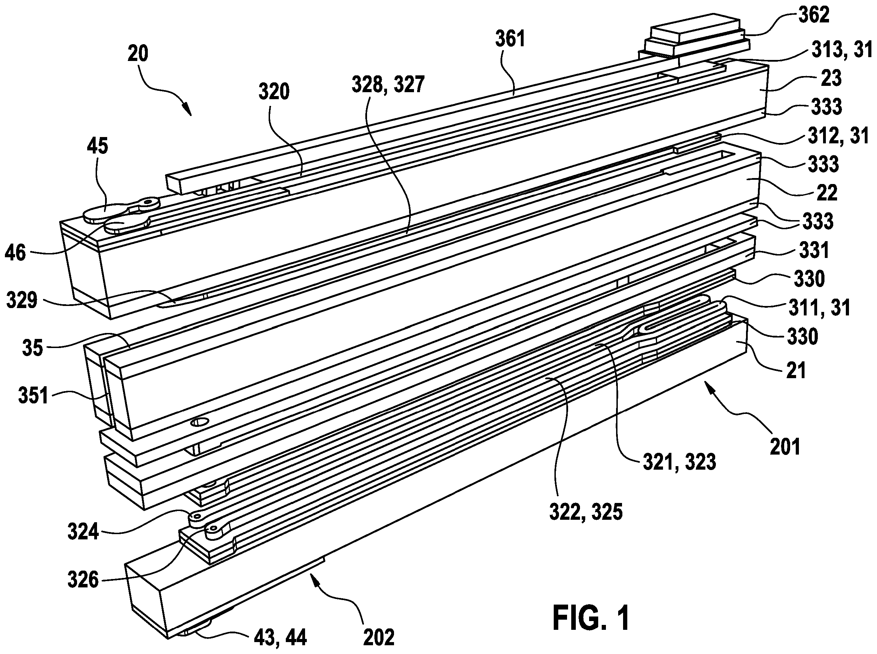

Die Figur 1 zeigt in Explosionsdarstellung perspektivisch und schematisch ein erfindungsgemäßes Sensorelement

Die weiteren Figuren zeigen vergrößerte Detailansichten

### Beschreibung des Ausführungsbeispiels

Figur 1 zeigt als ein Ausführungsbeispiel der Erfindung eine Gesamtansicht eines Sensorelements 20, das in einem Gehäuse eines Gasmessfühlers (nicht gezeichnet) angeordnet werden kann, der zur Bestimmung der Sauerstoffkonzentration in einem Abgas eines Verbrennungsmotors (nicht gezeichnet) dient. Mit entsprechenden Funktionselementen versehen ist die Erfindung selbstverständlich auch auf Sensorelemente für andere Sensoren, beispielsweise Sensoren zur Partikelmessung geeignet.

Das Sensorelement erstreckt sich in der Figur 1 in Längsrichtung von links nach rechts, wobei ein erster Endbereich 201 des Sensorelements 20 rechts und ein zweiter Endbereich 202 des Sensorelements 20 links abgebildet ist. Im bestimmungsgemäßen Verbau und Betrieb ist der erste Endbereich 201 des Sensorelements 20 einem Abgas zugewandt und der zweite Endbereich 202 des Sensorelements 20 dem Abgas abgewandt.

Ferner erstreckt sich in der Figur 1 das Sensorelement 20 in Querrichtung von vorne nach hinten und in Hochrichtung von unten nach oben.

Das Sensorelement 20 ist aus bedruckten keramischen Schichten aufgebaut, die in diesem Beispiel als eine erste, zweite und eine dritte Festelektrolytfolie 21, 22, 23 ausgebildet sind und Yttriumoxid stabilisiertes Zirkonoxid (YSZ) enthalten. Die Festelektrolytfolien 21, 22, 23 weisen im Beispiel vor einem Sintervorgang eine Länge von 72mm, eine Breite von 5mm und eine Höhe von 540µm auf. Folien eines gesinterten Sensorelements 20 weisen um 20% verminderte Kantenlängen auf.

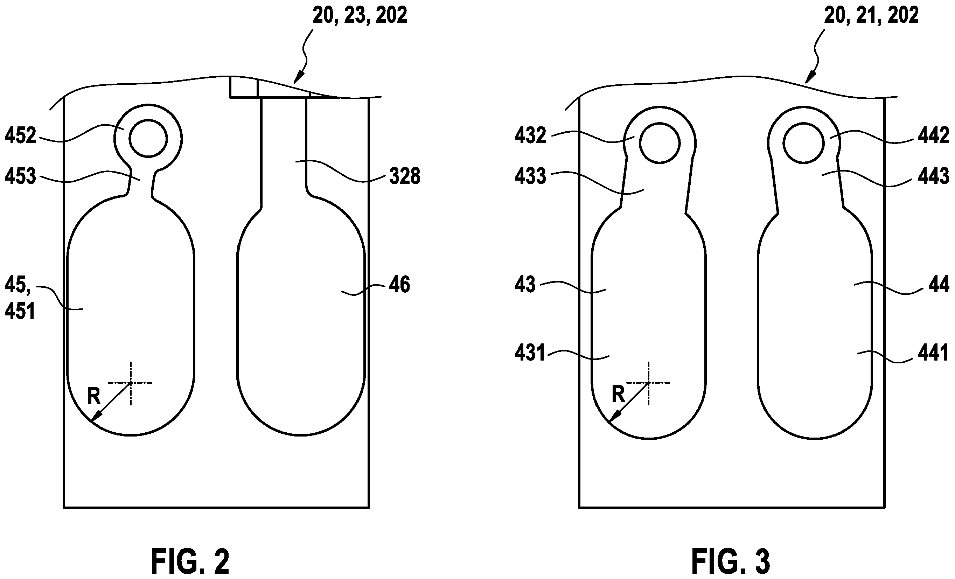

Die erste Festelektrolytfolie 21 ist auf ihrer aus Sicht des Sensorelements 20 nach außen weisenden Großfläche, in Figur 1 unten, im zweiten Endbereich 202 des Sensorelements 20 mit einer Kontaktfläche 43 und einer weiteren Kontaktfläche 44 versehen, hier bedruckt; siehe auch Figur 3.

Die erste Festelektrolytfolie 21 ist auf ihrer aus Sicht des Sensorelements 20 nach innen weisenden Großfläche, in Figur 1 oben, im ersten Endbereich 201 des Sensorelements 20 mit einer mäanderförmigen Heizvorrichtung 311 als ein Funktionselement 31, das der Beheizung des ersten Endbereichs 201 des Sensorelements 20 dient, versehen. In Fortsetzung der mäanderförmigen Heizvorrichtung 311 ist an deren Enden jeweils eine Leiterbahn 321, 322 angeschlossen, wobei der Übergang von Heizvorrichtung 311 zu Leiterbahn 321, 322 durch eine Zunahme der Strukturbreite und/oder -höhe bzw. eine Abnahme des elektrischen Widerstandes pro Länge gekennzeichnet ist.

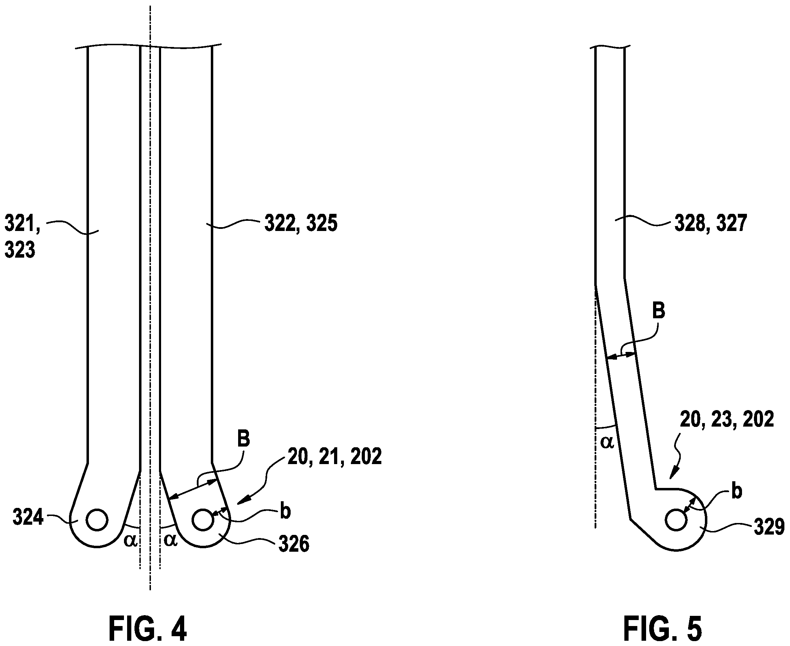

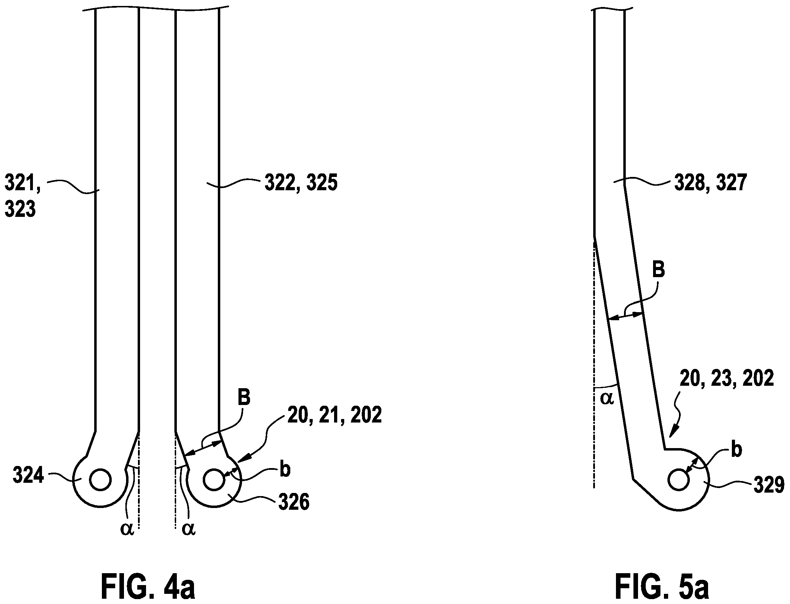

Die Leiterbahnen 321, 322 weisen abgasseitig einen als Zuleitung 323, 325 bezeichneten Abschnitt auf, der vorliegend eine konstante Breite hat. Die Leiterbahnen 321, 322 weisen ferner abgasabgewandt einen als Kragen 324, 326 bezeichneten Abschnitt, der vorliegend ringförmig ausgebildet ist, auf; siehe auch Figur 4.

Die erste Festelektrolytfolie 21 ist auf ihrer aus Sicht des Sensorelements 20 nach innen weisenden Großfläche, in Figur 1 oben, ferner mit Isolationsschichten 330 und einem Dichtrahmen 331, sowie einer Folienbinderschicht 333 versehen, hier bedruckt.

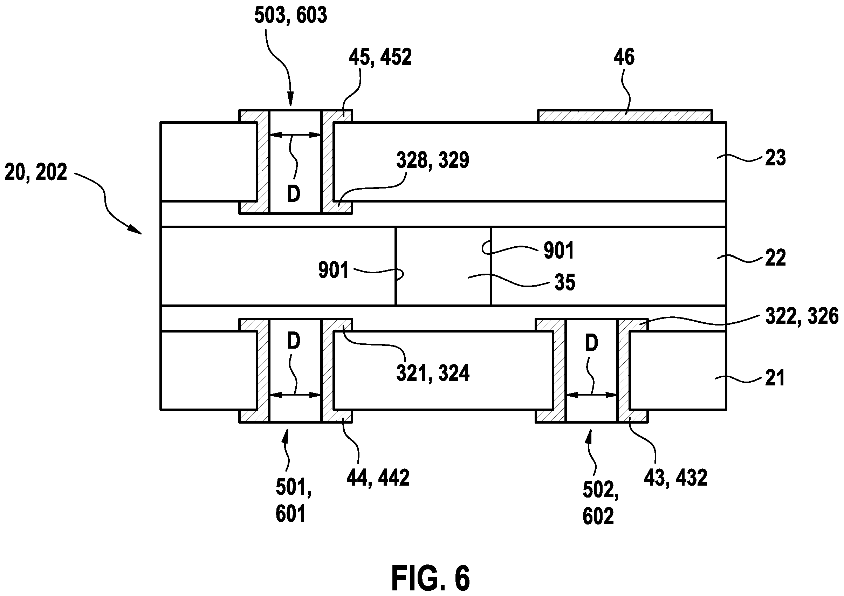

Die erste Festelektrolytfolie 21 weist im zweiten Endbereich 202 zwei Durchführungen 501, 502 auf, die in senkrechter Richtung durch die erste Festelektrolytfolie 21 verlaufen und jeweils eine Kontaktfläche 43, 44 mit einem Kragen 324, 326 einer Leiterbahn 321, 322 elektrisch leitendend verbinden; siehe Figur 6.

Die zweite Festelektrolytfolie 22 ist beidseitig mit jeweils einer Folienbinderschicht 333 versehen, ferner weist die zweite Festelektrolytfolie 22 einen Referenzgaskanal 35 auf, der sich längs von einer abgasabgewandt angeordneten Referenzgasöffnung 351 bis in den ersten Endbereich 201 des Sensorelements 20 erstreckt und dabei in Querrichtung mittig verläuft. Der Referenzgaskanal 35 ist ungefüllt ausgebildet, insbesondere sind in ihm keine porösen Füllungen vorgesehen.

Die dritte Festelektrolytfolie 23 ist auf ihrer aus Sicht des Sensorelements 20 nach innen weisenden Großfläche, in Figur 1 unten, dem Referenzgaskanal 35 gegenüberliegend, mit einer Cermetelektrode 312 als Funktionselement 31 zur Messung einer Sauerstoffkonzentration versehen. In Fortsetzung der Cermetelektrode 312 ist an deren Ende eine Leiterbahn 328 angeschlossen, wobei der Übergang von der Cermetelektrode zu der Leiterbahn 328 durch eine Abnahme der Strukturbreite gekennzeichnet ist.

Die Leiterbahn 328 weist abgasseitig einen als Zuleitung 327 bezeichneten Abschnitt auf, der vorliegend eine konstante Breite hat. Die Leiterbahn 328 weist ferner abgasabgewandt einen als Kragen 329 bezeichneten Abschnitt, der vorliegend ringförmig ausgebildet ist, auf; siehe auch Figur 5. Auf dieser Seite der dritten Festelektrolytschicht 23 ist, zumindest wo ansonsten unbedruckt, eine Folienbinderschicht 333 vorgesehen.

Die dritte Festelektrolytfolie 23 ist auf ihrer aus Sicht des Sensorelements 20 nach außen weisenden Großfläche, in Figur 1 oben, im zweiten Endbereich 202 des Sensorelements 20 mit einer Kontaktfläche 45 und einer weiteren Kontaktfläche 46 versehen, hier bedruckt; siehe auch Figur 2.

An die weitere Kontaktfläche 46 schließt sich eine Leiterbahn 320 mit beispielsweise konstanter Breite an, die sich bis zu einer im ersten Endebereich 201 des Sensorelements 20 angeordneten weiteren Cermetelektrode 313 erstreckt. Die Leiterbahn 320 ist mit einer zum Beispiel dichten Abdeckschicht 361 bedeckt, die weitere Cermetelektrode 313 ist mit porösen Schichten 362 versehen, sodass eine Kommunikation zwischen Außenraum und weiterer Cermetelektrode 313 gewährleistet ist.

Die dritte Festelektrolytfolie 23 weist im zweiten Endereich eine Durchführung 503 auf, die die in senkrechter Richtung durch die dritte Festelektrolytfolie 23 verläuft und die die Kontaktfläche 45 mit dem Kragen 329 elektrisch leitendend verbindet; siehe Figur 6.

In der Figur 2 ist der zweite, abgasabgewandte Endbereich 202 des Sensorelements 20 in Aufsicht auf die dritte Festelektrolytfolie 23 gezeigt. Dort ist mit Blick zum ersten, abgaszugewandten Endbereich 201 des Sensorelements 20 die Kontaktfläche 45 links angeordnet.

Die Kontaktfläche 45 setzt sich zusammen aus drei Teilbereichen, nämlich einem Rumpfbereich 451, einem Kopfbereich 452 und einem Halsbereich 453. Der Rumpfbereich 451 ist auf der dem Abgas abgewandten Seite der Kontaktfläche 45 angeordnet. Er hat eine längliche Grundform, die aus einem Rechteck gleicher Länge und Breite durch maximale Abrundung der Ecken hervorgeht, also durch eine Abrundung mit einem Krümmungsradius R, der der halben Breite des Rumpfbereichs 451 bzw. der Kontaktfläche 45 entspricht. Auf diese Weise entstehen somit halbkreisförmige Endbereiche des Rumpfbereiches 451 bzw. der Kontaktfläche 45 auf der dem Abgas abgewandten Seite der Kontaktfläche 45.

Bezogen auf ein ungesintertes Sensorelement 20 (gesintert: -20%) beträgt die Länge des Rumpfbereiches 451 in diesem Beispiel 2,5mm oder mehr, die Breite des Rumpfbereichs 451 1,5mm oder mehr. Der Rumpfbereich 451 ist von der linken Außenkante des Sensorelements 20 0,4mm oder weniger beabstandet und von der vorderen Außenkante des Sensorelements 20 1,3mm oder weniger beabstandet.

Der Kopfbereich 452 ist auf der dem Abgas zugewandten Seite der Kontaktfläche 45 angeordnet. Der Kopfbereich 452 ist beispielsweise ringförmig ausgebildet, mit einem Innendurchmesser von 0,5mm oder weniger und einem Außendurchmesser von 1mm oder mehr, bezogen auf ein ungesintertes Sensorelement 20 (gesintert: -20%).

Der Halsbereich 453 ist zwischen dem Rumpfbereich 451 und dem Kopfbereich 452 ausgebildet. Er bildet gegenüber dem Rumpfbereich 451 und dem Kopfbereich 452 eine Einschnürung der Kontaktfläche 45 mit einer minimalen Breite von im Beispiel 0,3mm und einer Länge von 0,3mm, bezogen auf ein ungesintertes Sensorelement 20 (gesintert: - 20%).

Der Rumpfbereich 451 weist im Beispiel eine Spiegelsymmetrie bezüglich einer Achse auf, die in Längsrichtung des Sensorelements 20 weist. Der Kopfbereich 452 und der Halsbereich 453 weisen ebenfalls eine Spiegelsymmetrie auf, allerdings bezüglich einer Achse, die gegenüber der Längsachse des Sensorelements 20 um 9° bei Aufsicht auf das Sensorelement 20 im mathematisch negativen Drehsinn verdreht ist, sodass der Kopfbereich 452 und der Halsbereich 453 insgesamt leicht zur Sensormitte hin verkippt sind.

Der Kopfbereich 452 der Kontaktfläche 45 wirkt mit einer Durchführung 503 durch die dritte Festelektrolytschicht 23 elektrisch leitend zusammen.

In Figur 2 ist überdies mit Blick zum ersten, abgaszugewandte Endbereich 201 des Sensorelements 20 die weitere Kontaktfläche 46 rechts neben der Kontaktfläche 45 angeordnet. Anordnung und Größe der weiteren Kontaktfläche 46 entspricht in diesem Sinn, also unter Vertauschung von links und rechts, der Anordnung und der Größe des Rumpfbereichs 451 der Kontaktfläche 45 mit der Maßgabe, dass zwischen der Kontaktfläche 45 und der weiteren Kontaktfläche 46 ein Abstand von mindestens 0,6mm besteht, bezogen auf ein ungesintertes Sensorelement 20 (gesintert: -20%).

Die weitere Kontaktfläche 46 besteht lediglich aus einem dem Rumpfbereich 451 der Kontaktfläche 45 entsprechenden Teil, weist also weder Kopf- noch Halsbereich auf. Er wirkt auch nicht mit einer Durchführung zusammen, stattdessen ist er unmittelbar mit der Leiterbahn 328 kontaktiert, die zu der weiteren Cermetelektrode 313 führt. Eine Mittenachse der Leiterbahn 328 in Längsrichtung ist dabei bezogen auf eine Mittenachse der weiteren Kontaktfläche 46 in Längsrichtung um 0,1mm bis 0,4mm, im Beispiel um 0,2mm, quer nach innen verschoben, bezogen auf ein ungesintertes Sensorelement 20 (gesintert: -20%).

Die Kontaktflächen 45, 46 weisen einen Edelmetallanteil von 83 Gew.-% bis 87 Gew.-%, und einen Anteil an ZrO2 und Y2O3 von zusammen 12 Gew.-% bis 16 Gew.-% auf.

In die Figur 3 ist der zweite, abgasabgewandte Endbereich 202 des Sensorelements 20 in Untersicht unter die in Figur 1 nach unten weisende erste Festelektrolytfolie 21 gezeigt. Dort ist mit Blick zum ersten, abgaszugewandte Endbereich 201 des Sensorelements 20 die Kontaktfläche 43 links angeordnet.

Die Kontaktfläche 43 setzt sich zusammen aus drei Teilbereichen, nämlich einem Rumpfbereich 431, einem Kopfbereich 432 und einem Halsbereich 433. Der Rumpfbereich 431 ist auf der dem Abgas abgewandten Seite der Kontaktfläche 43 angeordnet. Er hat eine längliche Grundform, die aus einem Rechteck gleicher Länge und Breite durch maximale Abrundung der Ecken hervorgeht, also durch eine Abrundung mit einem Krümmungsradius R, der der halben Breite des Rumpfbereichs 431 bzw. der Kontaktfläche 43 entspricht. Auf diese Weise entstehen somit halbkreisförmige Endbereiche des Rumpfbereiches 431 bzw. der Kontaktfläche 43 auf der dem Abgas abgewandten Seite der Kontaktfläche 43.

Bezogen auf ein ungesintertes Sensorelement 20 (gesintert: -20%) beträgt die Länge des Rumpfbereiches 431 in diesem Beispiel 2,5mm oder mehr, die Breite des Rumpfbereichs 431 1,5mm oder mehr. Der Rumpfbereich 431 ist von der linken Außenkante des Sensorelements 20 0,4mm oder weniger beabstandet und von der vorderen Außenkante des Sensorelements 20 1,3mm oder weniger beabstandet.

Der Kopfbereich 432 ist auf der dem Abgas zugewandten Seite der Kontaktfläche 43 angeordnet. Der Kopfbereich 432 ist beispielsweise ringförmig ausgebildet, mit einem Innendurchmesser von 0,5mm oder weniger und einem Außendurchmesser von 1mm oder mehr, bezogen auf ein ungesintertes Sensorelement 20 (gesintert: -20%).

Der Halsbereich 433 ist zwischen dem Rumpfbereich 431 und dem Kopfbereich 432 ausgebildet. Er bildet gegenüber dem Rumpfbereich 431 und dem Kopfbereich 432 eine Einschnürung der Kontaktfläche 43 mit einer minimalen Breite von im Beispiel 0,9mm und einer Länge von 0,3mm, bezogen auf ein ungesintertes Sensorelement 20 (gesintert: - 20%).

Der Halsbereich 433 der Kontaktfläche 43 ist wesentlich breiter, hier um einen Faktor größer 2, als der Halsbereich 451 der Kontaktfläche 45 in Figur 2. Hintergrund ist, dass über die Kontaktfläche 43 der Heizvorrichtung 311 hohe Ströme zugeführt werden, während über die Kontaktfläche 45 der Cermetelektrode 312 nur vergleichsweise geringe Ströme zugeführt werden. Die Kontaktfläche 43 ist folglich mit einem verminderten ohmschen Widerstand bzw. verbreitertem Halsbereich 433 ausgestaltet.

Der Rumpfbereich 431 weist im Beispiel eine Spiegelsymmetrie auf, bezüglich einer Achse, die in Längsrichtung des Sensorelements 20 weist. Der Kopfbereich 432 und der Halsbereich 433 weisen ebenfalls eine Spielgelsymmetrie auf, allerdings bezüglich einer Achse, die gegenüber der Längsachse des Sensorelements 20 um 9° bei Aufsicht auf das Sensorelement 20 im mathematisch negativen Drehsinn verdreht ist, sodass der Kopfbereich 432 und der Halsbereich 433 insgesamt leicht zur Sensormitte hin verkippt sind.

Der Kopfbereich 432 der Kontaktfläche 43 wirkt mit einer Durchführung 501 durch die erste Festelektrolytschicht 21 elektrisch leitend zusammen.

In Figur 3 ist überdies mit Blick zum ersten, abgaszugewandten Endbereich 201 des Sensorelements 20 die weitere Kontaktfläche 44 rechts neben der Kontaktfläche 43 angeordnet. Anordnung und Größe der weiteren Kontaktfläche 46 entsprechen in diesem Sinn, also unter Vertauschung von links und rechts und von positivem Drehsinn mit negativen Drehsinn, der Anordnung und der Größe der Kontaktfläche 43 mit der Maßgabe, dass zwischen der Kontaktfläche 43 und der weiteren Kontaktfläche 44 ein Abstand von mindestens 0,6mm besteht, bezogen auf ein ungesintertes Sensorelement 20 (gesintert: -20%).

Die Kontaktflächen 43, 44 weisen einen Edelmetallanteil von 83 Gew.-% bis 87 Gew.-%, und einen Anteil an ZrO2 und Y2O3 von zusammen 12 Gew.-% bis 16 Gew.-% auf.

In der Figur 4 ist der zweite, abgasabgewandte Endbereich 202 des Sensorelements 20 in Aufsicht auf die erste Festelektrolytfolie 21, in Figur 1 von oben, gezeigt. Dort ist mit Blick zum ersten, abgaszugewandten Endbereich 201 des Sensorelements 20 die Leiterbahn 322 rechts angeordnet. Die Leiterbahn 322 setzt sich zusammen aus zwei Teilbereichen, nämlich einer Zuleitung 325 und einem Kragen 326.

Die Zuleitung 325 bildet den abgasseitigen Teil der Leiterbahn 322 und erstreckt sich von der Heizvorrichtung 311 abgasseitig bis zu dem abgasabgewandt der Zuleitung 325 angeordneten Kragen 326. Vorliegend weist die Zuleitung 325 eine Breite B von 1,2mm auf und verläuft abgasseitig mit einer Beabstandung in Querrichtung von 0,25mm zur mittleren Längsachse des Sensorelements 20, jeweils bezogen auf ein ungesintertes Sensorelement 20 (gesintert: -20%). In einem abgasabgewandten Endbereich ist die Zuleitung 325 nach rechts, also nach außen, unter einem Winkel von 18° abgewinkelt.

Der Kragen 326 ist ringförmig ausgebildet und beschreibt vorliegend einen Bogen von 180°, dessen Außendurchmesser mit der Breite B der Zuleitung 325 identisch ist und dessen Innendurchmesser 0,4mm beträgt. Eine Breite des Kragens beträgt somit 0,3mm, jeweils bezogen auf ein ungesintertes Sensorelement 20 (gesintert: -20%). Ein Breitenverhältnis aus Kragenbreite b zu Zuleitungsbreite B beträgt 0,33.

Der elektrische Widerstand der Durchführung 501 ist dem elektrischen Widerstand der Leiterbahn 322 gleich oder etwa gleich, bezogen auf eine Temperaturverteilung, die im Betrieb des Sensors auftreten bzw. typischerweise auftreten kann. Neben einer homogenen Temperaturverteilung, zum Beispiel 20°C, ist hierbei alternativ auch auf Temperaturverteilungen abstellbar, die inhomogen sind. Beispielsweise können gleichmäßige Temperaturanstiege in Längsrichtung von 1100°C im Bereich der Heizvorrichtung 311 und 200°C, 300°C oder sogar 400°C im Bereich der Durchführung 501 zugrunde gelegt werden.

Der elektrische Widerstand der elektrischen Verbindung des Funktionselements, insbesondere der Heizvorrichtung 311 mit der Kontaktfläche 43 liegt beispielsweise im Bereich von 2,5 Ohm bei 20°C.

In Figur 4 ist überdies mit Blick zum ersten, abgaszugewandte Endbereich 201 des Sensorelements 20 die Leiterbahn 321 bezogen auf die mittlere Längsachse zu der Leiterbahn 322 symmetrisch angeordnet. Anordnung und Größe der Leiterbahn 321 entspricht in diesem Sinn, also unter Vertauschung von links und rechts, der Anordnung und der Größe der Leiterbahn 322.

Die Zuleitungen 325, 323 weisen einen Edelmetallanteil von mehr als 95 Gew.-% zum Beispiel 98 Gew.-% und mindestens 1 Gew.-% Al2O3 auf.

Der elektrische Widerstand der Durchführung 502 ist dem elektrischen Widerstand der Leiterbahn 321 gleich oder etwa gleich, bezogen auf eine Temperaturverteilung, die im Betrieb des Sensors auftreten bzw. typischerweise auftreten kann. Neben einer homogenen Temperaturverteilung, zum Beispiel 20°C, ist hierbei alternativ auch auf Temperaturverteilungen abstellbar, die inhomogen sind. Beispielsweise können gleichmäßige Temperaturanstiege in Längsrichtung von 1100°C im Bereich des Heizvorrichtung 311 und 200°C, 300°C oder sogar 400°C im Bereich der Durchführung 501 zugrunde gelegt werden

Die Figur 4a zeigt als Variante ein Sensorelement 20 mit geringfügig modifizierten Zuleitungen 323, 325, wobei die Modifikation lediglich darin besteht, dass die Breite B der Zuleitungen 323, 225 nur 1,08mm statt 1,2mm beträgt, also im Vergleich zum Kragen 324, 326 geringfügig (10%) reduziert ist. Die metrischen Maße sind bezogen auf ein ungesintertes Sensorelement 20 (gesintert -20%).

In der Figur 5 ist der zweite, abgasabgewandte Endbereich 202 des Sensorelements 20 in Untersicht unter die dritte Festelektrolytfolie 23, in Figur 3 von unten, gezeigt. Dort ist mit Blick zum ersten, abgaszugewandte Endbereich 201 des Sensorelements 20 die Leiterbahn 322 rechts angeordnet. Die Leiterbahn 322 setzt sich zusammen aus zwei Teilbereichen, nämlich einer Zuleitung 327 und einem Kragen 329.

Die Zuleitung 327 bildet den abgasseitigen Teil der Leiterbahn und erstreckt sich von der Cermetelektrode 312 abgasseitig bis zu dem abgasabgewandt der Zuleitung 327 angeordneten Kragen 329. Vorliegend weist die Zuleitung eine Breite B von 0,4mm (ungesintert; gesintert: -20%) auf und verläuft abgasseitig so, dass sie, in senkrechter Projektion in Aufsicht auf das Sensorelement 20, innerhalb des Referenzgaskanals 35 angeordnet ist. Dieser Teil der Zuleitung 327 ist während des Fertigungsprozess somit weitgehend vor Verquetschungen geschützt.

In einem abgasabgewandten Endbereich ist die Zuleitung 327 nach rechts, also nach außen, unter einem Winkel von nicht mehr als 25°, hier von 8°, abgewinkelt. In diesem abgasabgewandten Endbereich schneidet sich die Zuleitung mit der Kante des Referenzgaskanals 35 in senkrechter Projektion in Aufsicht auf das Sensorelement 20. Durch den vergleichsweise kleinen Schnittwinkel ergibt sich eine lange Überlappungszone zwischen Leiterbahn 328 und Kante des Referenzgaskanals 35 und somit wiederum ein guter Schutz vor Verquetschungen der Zuleitung 327 während des Fertigungsprozesses.

Der Kragen 329 ist ringförmig ausgebildet. Eine Breite des Kragens b beträgt 0,3mm, bezogen auf ein ungesintertes Sensorelement 20 (gesintert: -20%). Ein Breitenverhältnis aus Kragenbreite b zu Zuleitungsbreite B beträgt 0,75.

Die Zuleitung 327 weist einen Edelmetallanteil von 83 Gew.-% bis 87 Gew.-%, und einen Anteil an Zr02 und Y2O3 von zusammen 12 Gew.-% bis 16 Gew.-% auf.

Der elektrische Widerstand der Durchführung 503 ist dem elektrischen Widerstand der Leiterbahn 328 gleich oder etwa gleich, bezogen auf eine Temperaturverteilung, die im Betrieb des Sensors auftreten bzw. typischerweise auftreten kann. Neben einer homogenen Temperaturverteilung, zum Beispiel 20°C, ist hierbei alternativ auch auf Temperaturverteilungen abstellbar, die inhomogen sind. Beispielsweise können gleichmäßige Temperaturanstiege in Längsrichtung von 750°C im Bereich der Cermetelektrode 312 und 200°C, 300°C oder sogar 400°C im Bereich der Durchführung 503 zugrunde gelegt werden.

Die Figur 5a zeigt als Variante ein Sensorelement 20 mit geringfügig modifizierter Zuleitung 328, wobei die Modifikation lediglich darin besteht, dass die Breite B der Zuleitung 328 im abgasabgewandten Endbereich gegenüber dem abgaszugewandten Bereich der Zuleitung 328 um 50% erhöht ist, von 0,4mm auf 0,6mm. Die metrischen Maße sind bezogen auf ein ungesintertes Sensorelement 20 (gesintert -20%).

Ein Schnitt durch das in den vorangehende Figuren 1 bis 5 gezeigte Sensorelement 20, in einer Ebene senkrecht zur Längsrichtung des Sensorelements 20 durch die Durchführungen 501, 502, 503 ist in der Figur 6, rein schematisch, gezeigt.

Die Durchführungen 501, 502, 503 sind als leitfähige Beschichtung der radialen Wand eines Durchkontaktierlochs 601, 602, 603 des Sensorelements 20 ausgebildet. Der Durchmesser der Durchkontaktierlöcher 601, 602, 603 beträgt im Beispiel 0,6mm, bezogen auf ein ungesintertes Sensorelement 20 (gesintert: -20%, also 0,48mm).

Ersichtlich sind die Durchführungen 501, 502, 503 jeweils mit dem Referenzgaskanal 35 in Aufsicht auf das Sensorelement 20 überdeckungsfrei ausgeführt.

Die Durchführungen 501, 502, 503 weisen einen Edelmetallanteil von 83 Gew.-% bis 87 Gew.-%, und einen Anteil an ZrO2 und Y2O3 von zusammen 3 Gew.-% bis 8 Gew.-% und zusätzlich ein Anteil von Nb2O5 von 6 Gew.-% bis 12 Gew.-% auf.

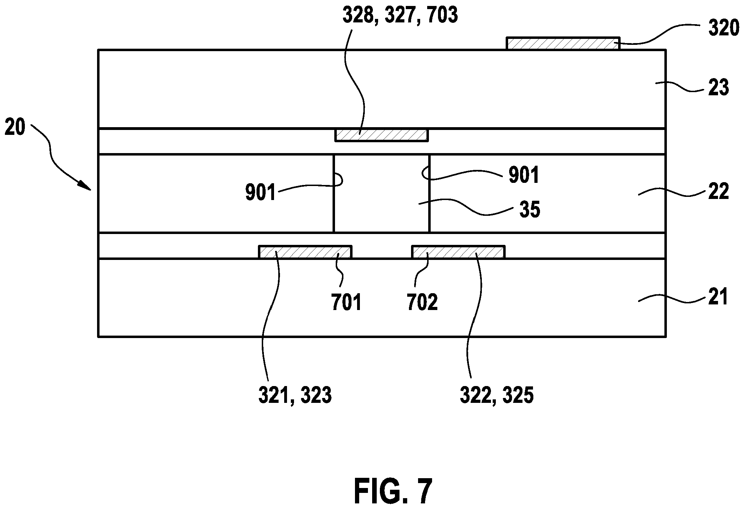

Ein Schnitt durch das in den vorangehende Figuren 1 bis 5 gezeigte Sensorelement 20, in einer Ebene senkrecht zur Längsrichtung des Sensorelements 20 etwa im Bereich der halben Längserstreckung des Sensorelements 20 ist in der Figur 7, rein schematisch, gezeigt.

Wie ersichtlich, kommt in Aufsicht auf das Sensorelement 20 die Leiterbahn 328 bzw. die Zuleitung 327, die zu der Cermetelektrode 312 führen, über ihre volle Breite mit dem Referenzkanal 35 zur Überdeckung 703. Ferner kommen die Leiterbahnen 321, 322, bzw. die Zuleitungen 323, 325, die zu dem Widerstandsheizer führen, über jeweils ca. 10% ihrer Breite mit dem Referenzkanal 35 zur Überdeckung 701, 702.

## Patentansprüche

1. Sensor mit einem Sensorelement (20) zum Nachweis der Konzentration einer Gaskomponente oder der Temperatur oder eines festen Bestandteils oder eines flüssigen Bestandteils eines Abgases eines Verbrennungsmotors, wobei das Sensorelement (20) in seiner Längsrichtung einander gegenüberliegend einen ersten Endbereich (201) und einen zweiten Endbereich (202) aufweist, wobei das Sensorelement (20) in dem ersten Endbereich (201), ein Funktionselement (31, 311, 312, 313) aufweist, das mit einer im zweiten Endbereich (202) auf der Außenfläche des Sensorelements (20) angeordneten Kontaktfläche (43, 44, 45, 46) elektrisch leitend verbunden ist, wobei die Kontaktfläche (43) auf seiner vom ersten Endbereich (201) abgewandten Seite eine Abrundung aufweist und wobei die Kontaktfläche (43, 44, 45) einen Rumpfbereich (431, 441, 451), einen Kopfbereich (432, 442, 452) und einen Halsbereich (433, 443, 453) aufweist, wobei der Rumpfbereich (431, 441, 451) auf der vom ersten Endbereich (201) abgewandten Seite der Kontaktfläche (43, 44, 45) angeordnet ist, wobei der Kopfbereich (432, 442, 452) auf der dem ersten Endbereich (201) zugewandten Seite der Kontaktfläche (43, 44, 45) angeordnet ist, wobei zwischen dem Rumpfbereich (431, 441, 451) und dem Kopfbereich (432, 442, 452) der Halsbereich (433, 443, 453) angeordnet ist, in dem die Breite der Kontaktfläche (43, 44, 45) geringer ist als im Rumpfbereich (431, 441, 451) und im Kopfbereich (432, 442, 452), wobei der Kopfbereich (432, 442, 452) die Verbindung zu einer Durchführung (501, 502, 503), die vom Kopfbereich (432, 442, 452) ausgehend senkrecht zu der Kontaktfläche (43, 44, 45) in das Innere des Sensorelements führt, darstellt, wobei der Rumpfbereich oval mit geraden, in Längsrichtung verlaufenen Seitenkanten ausgebildet ist, und mit einem metallischen Kontaktelement, das das Sensorelement (20) an der Kontaktfläche (43, 44, 45, 46) kraftschlüssig und/oder formschlüssig von außerhalb des Sensorelements (20) elektrisch kontaktiert.

2. Sensornach Anspruch 1, **dadurch gekennzeichnet**, ein Krümmungsradius (R) der Abrundung nicht kleiner als 6%, insbesondere nicht kleiner als 12% der Breite des Sensorelements (20), ist.

3. Sensor nach Anspruch 1 oder 2, **dadurch gekennzeichnet, dass** ein Krümmungsradius (R) der Abrundung nicht weniger als 0,3mm, insbesondere nicht weniger als 0,6mm, beträgt.

4. Sensor nach einem der Ansprüche 1 bis 3, **dadurch gekennzeichnet**, ein Krümmungsradius (R) der Abrundung nicht kleiner als 15%, insbesondere nicht kleiner als 30% der Breite der Kontaktfläche (43, 44, 45, 46) ist, beispielsweise maximal ist.

5. Sensor nach einem der Ansprüche 1 bis 4, **dadurch gekennzeichnet, dass** der Kopfbereich (432, 442, 452) kreisförmig oder kreisringförmig ist.

6. Sensornach einem der Ansprüche 1 bis 5, **dadurch gekennzeichnet, dass** der Rumpfbereich (431, 441, 451) der Kontaktfläche (43, 44, 45) eine erste Symmetrieachse aufweist, die insbesondere in Längsrichtung des Sensorelements (20) verläuft, und der Kopfbereich (432, 442, 452) und der Halsbereich (433, 443, 453) der Kontaktfläche (43, 44, 45) eine gemeinsame zweite Symmetrieachse aufweisen, und erste Symmetrieachse und zweite Symmetrieachse einen Winkel von 5° bis 25° einschließen.

7. Sensor nach Anspruch 6, **dadurch gekennzeichnet**, das die Kontaktfläche (43, 44, 45) in Querrichtung des Sensorelements (20) außermittig angeordnet ist und Kopf- und Halsbereich (432, 442, 452; 433, 443, 453) vom Rumpfbereich (431, 441, 451) aus gesehen zur Mitte in Querrichtung des Sensorelements (20) geneigt angeordnet sind.

8. Sensor nach einem der Ansprüche 1 bis 7, **dadurch gekennzeichnet, dass** im zweiten Endbereich (202) des Sensorelements (20) neben der Kontaktfläche (43, 44, 45, 46) eine weitere Kontaktfläche (43, 44, 45, 46) angeordnet ist, wobei die weitere Kontaktfläche (43, 44, 45, 46) mit dem Funktionselement (31, 311, 312, 313) und/oder mit einem weiteren Funktionselement (31, 311, 312, 313) elektrisch leitend verbunden ist, wobei zwischen der Kontaktfläche (43, 44, 45, 46) und der weiteren Kontaktfläche (43, 44, 45, 46) ein Abstand ausgebildet ist, wobei ein Krümmungsradius (R) der Abrundung nicht kleiner als 10% des Abstands zwischen der Kontaktfläche (43, 44, 45, 46) und der weiteren Kontaktfläche (43, 44, 45, 46), insbesondere nicht kleiner als 30% des Abstands zwischen der Kontaktfläche (43, 44, 45, 46) und der weiteren Kontaktfläche (43, 44, 45, 46), ist.

9. Sensor nach Anspruch 8, **dadurch gekennzeichnet, dass** ein Krümmungsradius (R) der Abrundung nicht kleiner als der Abstands zwischen der Kontaktfläche (43, 44, 45, 46) und der weiteren Kontaktfläche (43, 44, 45, 46) ist.

10. Sensor nach Anspruch 8 oder 9, **dadurch gekennzeichnet, dass** die Kontaktfläche (43, 44) und die weitere Kontaktfläche (43, 44) spiegelsymmetrisch zu einer Achse sind, die in Längsrichtung des Sensorelements (20) verläuft.

11. Sensor nach einem der Ansprüche 1 bis 10, **dadurch gekennzeichnet, dass** das Funktionselement (31, 311, 312) im Inneren des Sensorelements (20) angeordnet ist, wobei die elektrisch leitende Verbindung zwischen dem Funktionselement (31, 311, 312) und der Kontaktfläche (43, 44, 45) eine im Inneren des Sensorelements (20) im wesentlichen in Längsrichtung verlaufende Leiterbahn (321, 322, 328) aufweist und eine Durchführung (501, 502, 503) aufweist, die im wesentlichen senkrecht zur Längsrichtung und zur Querrichtung des Sensorelements (20) verläuft.

## Claims

1. Sensor comprising a sensor element (20) for detecting the concentration of a gas component or the temperature or a solid constituent part or a liquid constituent part of an exhaust gas from an internal combustion engine, wherein the sensor element (20) has a first end region (201) and a second end region (202) which are situated opposite one another in its longitudinal direction, wherein the sensor element (20) has, in the first end region (201), a functional element (31, 311, 312, 313) which is electrically conductively connected to a contact area (43, 44, 45, 46) which is arranged on the outer surface of the sensor element (20) in the second end region (202), wherein the contact area (43) has, on its side that is averted from the first end region (201), a rounded portion and wherein the contact area (43, 44, 45) has a body region (431, 441, 451), a head region (432, 442, 452) and a neck region (433, 443, 453), wherein the body region (431, 441, 451) is arranged on that side of the contact area (43, 44, 45) which is averted from the first end region (201), wherein the head region (432, 442, 452) is arranged on that side of the contact area (43, 44, 45) which faces the first end region (201), wherein the neck region (433, 443, 453) is arranged between the body region (431, 441, 451) and the head region (432, 442, 452), in which neck region the width of the contact area (43, 44, 45) is smaller than in the body region (431, 441, 451) and in the head region (432, 442, 452), wherein the head region (432, 442, 452) constitutes the connection to a bushing (501, 502, 503) which leads from the head region (432, 442, 452) into the interior of the sensor element perpendicularly to the contact area (43, 44, 45), wherein the body region is of oval design with straight side edges which run in the longitudinal direction, and comprising a metal contact element which electrically contact-connects the sensor element (20) to the contact area (43, 44, 45, 46) in a force-fitting and/or interlocking manner from outside the sensor element (20).

2. Sensor according to Claim 1, **characterized in that** a radius of curvature (R) of the rounded portion is not smaller than 6%, in particular not smaller than 12%, of the width of the sensor element (20).

3. Sensor according to Claim 1 or 2, **characterized in that** a radius of curvature (R) of the rounded portion is not less than 0.3 mm, in particular not less than 0.6 mm.

4. Sensor according to one of Claims 1 to 3, **characterized in that** a radius of curvature (R) of the rounded portion is not smaller than 15%, in particular not smaller than 30%, of the width of the contact area (43, 44, 45, 46), for example is at a maximum.

5. Sensor according to one of Claims 1 to 4, **characterized in that** the head region (432, 442, 452) is circular or ring-shaped.

6. Sensor according to one of Claims 1 to 5, **characterized in that** the body region (431, 441, 451) of the contact area (43, 44, 45) has a first axis of symmetry which runs in particular in the longitudinal direction of the sensor element (20), and the head region (432, 442, 452) and the neck region (433, 443, 453) of the contact area (43, 44, 45) have a common second axis of symmetry, and the first axis of symmetry and the second axis of symmetry enclose an angle of from 5° to 25°.

7. Sensor according to Claim 6, **characterized in that** the contact area (43, 44, 45) is arranged eccentrically in the transverse direction of the sensor element (20) and the head region and the neck region (432, 442, 452; 433, 443, 453) are arranged inclined in relation to the centre in the transverse direction of the sensor element (20) as seen from the body region (431, 441, 451).

8. Sensor according to one of Claims 1 to 7, **characterized in that** a further contact area (43, 44, 45, 46) is arranged next to the contact area (43, 44, 45, 46) in the second end region (202) of the sensor element (20), wherein the further contact area (43, 44, 45, 46) is electrically conductively connected to the functional element (31, 311, 312, 313) and/or to a further functional element (31, 311, 312, 313), wherein a distance is formed between the contact area (43, 44, 45, 46) and the further contact area (43, 44, 45, 46), wherein a radius of curvature (R) of the rounded portion is not smaller than 10% of the distance between the contact area (43, 44, 45, 46) and the further contact area (43, 44, 45, 46), in particular not smaller than 30% of the distance between the contact area (43, 44, 45, 46) and the further contact area (43, 44, 45, 46).

9. Sensor according to Claim 8, **characterized in that** a radius of curvature (R) of the rounded portion is not smaller than the distance between the contact area (43, 44, 45, 46) and the further contact area (43, 44, 45, 46) .

10. Sensor according to Claim 8 or 9, **characterized in that** the contact area (43, 44) and the further contact area (43, 44) are mirror-symmetrical to an axis which runs in the longitudinal direction of the sensor element (20) .

11. Sensor according to one of Claims 1 to 10, **characterized in that** the functional element (31, 311, 312) is arranged in the interior of the sensor element (20), wherein the electrically conductive connection between the functional element (31, 311, 312) and the contact area (43, 44, 45) has a conductor track (321, 322, 328) which runs substantially in the longitudinal direction in the interior of the sensor element (20) and has a bushing (501, 502, 503) which runs substantially perpendicularly to the longitudinal direction and to the transverse direction of the sensor element (20).

## Revendications

1. Capteur, comprenant un élément de capteur (20) permettant de détecter la concentration d'un composant de gaz ou la température ou un composant solide ou un composant liquide des gaz d'échappement d'un moteur à combustion interne, dans lequel l'élément de capteur (20) présente dans sa direction longitudinale une première zone d'extrémité (201) et une deuxième zone d'extrémité (202) à l'opposé l'une de l'autre, dans lequel l'élément de capteur (20) présente dans la première zone d'extrémité (201) un élément fonctionnel (31, 311, 312, 313) qui est relié de manière électriquement conductrice à une surface de contact (43, 44, 45, 46) disposée dans la deuxième zone d'extrémité (202) sur la face extérieure de l'élément de capteur (20), la surface de contact (43) présentant un arrondi sur sa face détournée de la première zone d'extrémité (201), et la surface de contact (43, 44, 45) présentant une zone de corps (431, 441, 451), une zone de tête (432, 442, 452) et une zone de col (433, 443, 453), la zone de corps (431, 441, 451) étant disposée sur la face, détournée de la première zone d'extrémité (201), de la surface de contact (43, 44, 45), la zone de tête (432, 442, 452) étant disposée sur la face, tournée vers la première zone d'extrémité (201), de la surface de contact (43, 44, 45), dans lequel, entre la zone de corps (431, 441, 451) et la zone de tête (432, 442, 452) est disposée la zone de col (433, 443, 453) dans laquelle la largeur de la surface de contact (43, 44, 45) est inférieure à celle dans la zone de corps (431, 441, 451) et dans la zone de tête (432, 442, 452), dans lequel la zone de tête (432, 442, 452) représente la connexion à un passage (501, 502, 503) menant à l'intérieur de l'élément de capteur en partant de la zone de tête (432, 442, 452) perpendiculairement à la surface de contact (43, 44, 45), dans lequel la zone de corps est réalisée de manière ovale avec des arêtes latérales droites s'étendant dans la direction longitudinale, et avec un élément de contact métallique qui établit un contact électrique avec l'élément de capteur (20) sur la surface de contact (43, 44, 45, 46) par adhérence et/ou par complémentarité de forme à l'extérieur de l'élément de capteur (20).

2. Capteur selon la revendication 1, **caractérisé en ce qu'**un rayon de courbure (R) de l'arrondi n'est pas inférieur à 6 %, en particulier n'est pas inférieur à 12 %, de la largeur de l'élément de capteur (20).

3. Capteur selon la revendication 1 ou 2, **caractérisé en ce qu'**un rayon de courbure (R) de l'arrondi ne mesure pas moins de 0,3 mm, en particulier ne mesure pas moins de 0,6 mm.

4. Capteur selon l'une quelconque des revendications 1 à 3, **caractérisé en ce qu'**un rayon de courbure (R) de l'arrondi n'est pas inférieur à 15 %, en particulier n'est pas inférieur à 30 %, de la largeur de la surface de contact (43, 44, 45, 46), par exemple **en ce qu'**il est maximal.

5. Capteur selon l'une quelconque des revendications 1 à 4, **caractérisé en ce que** la zone de tête (432, 442, 452) est circulaire ou en forme d'anneau de cercle.

6. Capteur selon l'une quelconque des revendications 1 à 5, **caractérisé en ce que** la zone de corps (431, 441, 451) de la surface de contact (43, 44, 45) présente un premier axe de symétrie qui s'étend en particulier dans la direction longitudinale de l'élément de capteur (20), et la zone de tête (432, 442, 452) et la zone de col (433, 443, 453) de la surface de contact (43, 44, 45) présentent un deuxième axe de symétrie commun, et le premier axe de symétrie et le deuxième axe de symétrie forment un angle compris entre 5° et 25°.

7. Capteur selon la revendication 6, **caractérisé en ce que** la surface de contact (43, 44, 45) dans la direction transversale de l'élément de capteur (20) est disposée de manière excentrée, et la zone de tête et la zone de col (432, 442, 452 ; 433, 443, 453) sont disposées de manière inclinée vers le centre dans la direction transversale de l'élément de capteur (20), vues à partir de la zone de corps (431, 441, 451).

8. Capteur selon l'une quelconque des revendications 1 à 7, **caractérisé en ce que** dans la deuxième zone d'extrémité (202) de l'élément de capteur (20), à côté de la surface de contact (43, 44, 45, 46), une autre surface de contact (43, 44, 45, 46) est disposée, l'autre surface de contact (43, 44, 45, 46) étant reliée de manière électriquement conductrice à l'élément fonctionnel (31, 311, 312, 313) et/ou à un autre élément fonctionnel (31, 311, 312, 313), un intervalle étant réalisé entre la surface de contact (43, 44, 45, 46) et l'autre surface de contact (43, 44, 45, 46), un rayon de courbure (R) de l'arrondi n'étant pas inférieur à 10 % de l'intervalle entre la surface de contact (43, 44, 45, 46) et l'autre surface de contact (43, 44, 45, 46), en particulier n'étant pas inférieur à 30 % de l'intervalle entre la surface de contact (43, 44, 45, 46) et l'autre surface de contact (43, 44, 45, 46).

9. Capteur selon la revendication 8, **caractérisé en ce qu'**un rayon de courbure (R) de l'arrondi n'est pas inférieur à l'intervalle entre la surface de contact (43, 44, 45, 46) et l'autre surface de contact (43, 44, 45, 46) .

10. Capteur selon la revendication 8 ou 9, **caractérisé en ce que** la surface de contact (43, 44) et l'autre surface de contact (43, 44) sont en symétrie spéculaire par rapport à un axe qui s'étend dans la direction longitudinale de l'élément de capteur (20).

11. Capteur selon l'une quelconque des revendications 1 à 10, **caractérisé en ce que** l'élément fonctionnel (31, 311, 312) est disposé à l'intérieur de l'élément de capteur (20), dans lequel la connexion électriquement conductrice entre l'élément fonctionnel (31, 311, 312) et la surface de contact (43, 44, 45) présente une piste conductive (321, 322, 328) s'étendant à l'intérieur de l'élément de capteur (20) substantiellement dans la direction longitudinale, et présente un passage (501, 502, 503) qui s'étend de manière substantiellement perpendiculaire à la direction longitudinale et à la direction transversale de l'élément de capteur (20).
